# EUROPEAN PATENT SPECIFICATION

(11) **EP 3 895 950 B1**
(45) Date of publication and mention of the grant of the patent: **17.01.2024**
(21) Application number: 20169897.4
(22) Date of filing: 16.04.2020
(51) Int. Cl.: B60W 50/00, B60W 60/00

(54) **METHODS AND SYSTEMS FOR AUTOMATED DRIVING SYSTEM MONITORING AND MANAGEMENT**
VERFAHREN UND SYSTEME ZUR ÜBERWACHUNG UND VERWALTUNG AUTOMATISIERTER FAHRSYSTEME
PROCÉDÉS ET SYSTÈMES DE SURVEILLANCE ET DE GESTION D'UN SYSTÈME DE COMMANDE AUTOMATIQUE

(43) Date of publication of application: 20.10.2021
(73) Proprietor: Zenuity AB, 413 46 Göteborg (SE)
(72) Inventor: GYLLENHAMMAR, Magnus, 435 43 Pixbo (SE); ZANDÉN, Carl, 437 38 Lindome (SE); KHORSAND VAKILZADEH, Majid, 431 66 Mölndal (SE); FALKOVÉN, Andreas, 431 34 MÖLNDAL (SE)
(74) Representative: Zacco Sweden AB

(56) References cited:
- DE-A1-102018 209 755
- US-A1- 2019 382 031
- US-A1- 2020 033 868

## Description

### TECHNICAL FIELD

The present invention relates to Automated Driving Systems (ADS) for vehicles, and more specifically, the present invention relates to methods and systems for monitoring and managing an ADS for ground vehicles.

### BACKGROUND ART

During these last few years, the development of autonomous vehicles has exploded and many different solutions are being explored. An increasing number of modern vehicles have advanced driver-assistance systems (ADAS) to increase vehicle safety and more generally road safety. ADAS - which for instance may be represented by adaptive cruise control, ACC, collision avoidance system, forward collision warning, etc. - are electronic systems that may aid a vehicle driver while driving. To function as intended, ADAS may rely on inputs from multiple data sources, such as e.g. automotive imaging, LIDAR, radar, image processing, computer vision, and/or in-car networking.

Today, development is ongoing in both ADAS as well as Autonomous Driving (AD), within a number of different technical areas within these fields. ADAS and AD will herein be referred to under the common term Automated Driving System (ADS) corresponding to all of the different levels of automation as for example defined by the SAE J3016 levels (0 - 5) of driving automation.

Accordingly, in a not too distant future, ADS solutions will to a greater extent find their way into modern vehicles. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles and/or relevant signage.

ADS features as described above are, however, bound to be required to function with a high integrity to provide sufficiently low risk for the vehicle occupant(s) as well as their surrounding environments. Ensuring that the risk is sufficiently low may require intractable amounts of data for statistical proofs, and would, according to an example, take e.g. approximately a hundred vehicles to drive continuously for five centuries, to acquire. There are several approaches to minimize the risk of the ADS features before they are launched onto public roads. However, on top of this, it is generally believed that the ADS features should be monitored once in the field, in order to ensure that they adhere to required safety levels. Further, as the complete sensor setups utilized by various ADS features may generate huge amounts of data, it may be challenging, if not impossible, to send all of that data to a cloud for offline processing and analysis.

US 2020/033868 A1 discloses a system for an autonomous vehicle that implement autonomous driver agents and driving policy learners for generating and improving policies based on collective driving experiences of the autonomous driver agents. In more detail, the system includes a set of autonomous driver agents, and a driving policy generation module that includes a set of driving policy learner modules for generating and improving policies based on the collective experiences collected by the driver agents. The driver agents can collect driving experiences to create a knowledge base. The driving policy learner modules can process the collective driving experiences to extract driving policies. The driver agents can be trained via the driving policy learner modules in a parallel and distributed manner to find novel and efficient driving policies and behaviors faster and more efficiently.

### SUMMARY

It is therefore an object of the present invention to provide a method for monitoring and managing an ADS of a plurality of vehicles, a computer-readable storage medium, a system, and a vehicle, which alleviate all or at least some of the above discussed problems.

Accordingly, one part of the solution pertains to a server-side solution, while another part pertains to a vehicle-side solution, as they are interrelated products.

In more detail, it is an object of the present invention to provide a framework for keeping the ADS of a ground vehicle operating in conditions that it has been developed and verified for and thereby attempt to reduce the risk for the vehicle occupant(s) as well as their surrounding environments. The term ground vehicle may in the present context to be understood as a road traffic vehicle such as e.g. cars, busses, trucks, or motorcycles.

These and other objects are achieved by means of the provided method for monitoring and managing an ADS of a plurality of vehicles, a computer-readable storage medium, a system, and a vehicle, as defined in the appended claims. The term exemplary is in the present context to be understood as serving as an instance, example or illustration.

According to a first aspect of the present invention there is provided a method monitoring and managing an Automated Driving System (ADS) of a plurality of ground vehicles. Each ADS has a scenario identifier module configured to monitor scenarios in a surrounding environment of each corresponding ground vehicle, and each ADS is associated with a statistical model indicative of a statistical distribution related to a plurality of scenarios detectable by means of the scenario identifier module of each ADS. The method comprises obtaining data from each of the plurality of ground vehicles, where the data is indicative of a set of locally updated model parameters of the statistical model, the locally updated model parameters being indicative of a statistical distribution associated with the detected scenario. Furthermore, the method comprises updating the statistical model based on the obtained data, and transmitting data indicative of the updated statistical model to the plurality of ground vehicles.

Accordingly, a solution for building and maintaining framework for keeping the ADS of a ground vehicle operating in conditions that it has been developed and verified for is presented. In more detail, the herein disclosed solution proposes using a system in the vehicle to discern the state of the environment and map it towards a statistical model used for safety assurance. Given this data it is further proposed to conduct updates to the statistical model associated with the ADS and preferably only transmit the updates of the statistical model from the vehicles to the central system rather than the entire sensor data, the trajectories of the surrounding objects, or detailed measurements of the environment. Thus, the proposed system allows for capturing all the events that the ADS is exposed to in order to update the "global" statistical model used for safety assurance of all the ADSs in the vehicle fleet. Moreover, the utilization of statistical models, which may be used to define the Operational Design Domain (ODD) for the ADS, allows for bandwidth-efficient communication as compared to sharing raw sensor data between a vehicle and a centralized fleet management system.

Accordingly, the present inventors realized that in addition to ensuring that the ADS performs safely it is also paramount that the statistical models used to make the safety assurance of the ADS (i.e. supporting the requirements of the ODD) in the first place are also updated and kept valid. This is particularly sensitive during the advent of ADSs in traffic, which likely will affect the traffic dynamics. Drastic changes in the statistical models carries a risk of violation of various safety design assumptions, which might lead to unsafe ADS behaviours. However, as sending raw sensor data is likely to be infeasible due to the vast volume of data being generated by the ADS, a more cost effective and bandwidth efficient solution is proposed. Moreover, the utilization of statistical models allows for a harmonized and efficient means to use the same framework both design-time and run-time, i.e. both for defining the ODD for the ADS as well as for asserting that the ADS is operating in an environment fulfilling the ODD. This facilitates the overall development of autonomous features and the verification process. Also, by using statistical models, a computationally efficient and bandwidth efficient means for sharing crucial information between ADS equipped vehicles and a central entity is provided.

An Operational design domain (ODD) is to be understood as a description of the operating conditions in which an automated or a semi-automated driving system (i.e. AD or ADAS) is designed to function, including, but not limited to, geographic, roadway (e.g. type, surface, geometry, edges and markings), environmental parameters, connectivity, surrounding objects, traffic parameters, and speed limitations.

In reference to the term "statistical model", it may be understood as a description of what the ADS can statistically expect from its operating environment. In more detail, from the start one can model a set of field data by different segmentation and quantification methods (which herein is referred to as "scenario identification"). In other words, the outcome of the scenario identification is a set of scenario parameters, and the statistical model(s) is/are obtained by modelling the scenarios identified in the field data. Thus, a statistical model may be understood as a mathematical representation of a statistical distribution. In more detail, the statistical model of an environment quantifies what the ADS can expect from its surroundings in a statistical way. In other words, the statistical model provides a probability measure for all scenarios (e.g. overtaking, pedestrian crossings, animal crossings, other road users' behaviours, etc.) that are probable to happen within the environment. Thus, in orderto statistically describe the environment, the statistical distributions corresponding to all scenarios may be pooled together in order to form a "global" statistical distribution.

A statistical model may accordingly be utilized to determine if the conditions and/or requirements of the operational design domain (ODD) are met, whereby the ADS validity may be determined.

Thus, in accordance with an embodiment of the present invention, the ADS is configured for an ODD, and the statistical model comprises a geographical parameter indicative of a geographical area within an operational environment of the ground vehicle. Accordingly, the method further comprises comparing the updated statistical model against a set of predefined requirements for the ODD, determining if the updated statistical model indicates that the predefined requirements for the ODD are not fulfilled within the geographical area based on the comparison, and transmitting a signal to the plurality of ground vehicles, the signal being indicative of an instruction to inhibit activation of the ADS within the geographical area, if the updated statistical model indicates that the predefined requirements for the ODD are not fulfilled within the geographical area (based on the statistical distributions of one or more scenarios within that geographical area). In some embodiments, the signal may be further indicative of an instruction to prohibit entry of the vehicle into the geographical area (with the ADS active), if the updated statistical model indicates that the predefined requirements for the ODD are not fulfilled within the geographical area.

Moreover, the statistical model can then feed information into the design process to define what integrity different parts of the ADS needs to operate with, and moreover define the ODD of the ADS. Thus, if the ADS is then implemented to the integrity defined through these statistical models it may be argued that the ADS will be statistically safe. However, in that case it is crucial that the statistical models are also valid at all times during the ADS's operation. When constructing the statistical models, one may need to consider confidence estimates and use conservative numbers for all the different values that goes into the safety argumentation and design of the ADS. This approach, in contrast to the traditional way of posing hard limits or ranges for different values, may allow for a design that solves the challenge without unnecessary margins.

According to a second aspect of the present invention, there is provided a (non-transitory) computer-readable storage medium storing one or more programs configured to be executed by one or more processors of a processing system, the one or more programs comprising instructions for performing the method for monitoring and managing an ADS according to any one of the embodiments disclosed herein. With this aspect of the invention, similar advantages and preferred features are present as in the previously discussed first aspect of the invention.

According to a third aspect of the present invention, there is provided system for monitoring and managing an ADS of a plurality of ground vehicles. Each ADS has a scenario identifier module configured to monitor scenarios in a surrounding environment of each corresponding ground vehicle, and each ADS is associated with a statistical model indicative of a statistical distribution related to a plurality of scenarios detectable by means of the scenario identifier module of each ADS. The system comprises a memory comprising the statistical model, and control circuitry configured to obtain data from each of the plurality of ground vehicles. The data is indicative of a set of locally updated model parameters of the statistical model. The locally updated model parameters are indicative of a statistical distribution associated with a detected scenario. The control circuitry is further configured to update the statistical model based on the obtained data, and to transmit data indicative of the globally updated statistical model to the plurality of ground vehicles. With this aspect of the invention, similar advantages and preferred features are present as in the previously discussed first aspect of the invention.

According to a fourth aspect of the present invention, there is provided a method for monitoring and managing an ADS of a ground vehicle. The ADS has a scenario identifier module configured to monitor scenarios in a surrounding environment of each corresponding ground vehicle, and the ADS is associated with a statistical model indicative of a statistical distribution related to a plurality of scenarios detectable by means of the scenario identifier module of the ADS. The method comprises obtaining sensor data comprising information about a surrounding environment of the ground vehicle, and detecting, by means of the scenario identifier module, a scenario in the surrounding environment based on the obtained sensor data and extracting a set of scenario parameters indicative of the detected scenario. Furthermore, the method comprises locally updating a set of model parameters of the statistical model based on the extracted set of scenario parameters, where the locally updated set of model parameters are indicative of a statistical distribution associated with the detected scenario. Further, the method comprises transmitting, to a remote entity comprising the statistical model, the locally updated set of model parameters and a number of samples used to generate the locally updated set of model parameters. With this aspect of the invention, similar advantages and preferred features are present as in the previously discussed first aspect of the invention. More specifically, this aspect of the invention may be construed as the vehicle-side part of the complete solution proposed herein, while the first three aspects pertained to the "back-office" part.

According to a fifth aspect of the present invention there is provided a system for monitoring and managing an ADS of a ground vehicle. The ADS has a scenario identifier module configured to monitor scenarios in a surrounding environment of each corresponding ground vehicle, and the ADS is associated with a statistical model indicative of a statistical distribution related to a plurality of scenarios detectable by means of the scenario identifier module of the ADS. The system comprises a memory comprising the statistical model, and control circuitry configured to obtain sensor data comprising information about a surrounding environment of the ground vehicle. The control circuitry is further configured to detect, by means of the scenario identifier module, a scenario in the surrounding environment based on the obtained sensor data and extracting a set of scenario parameters indicative of the detected scenario. Furthermore, the control circuitry is configured to locally update a set of model parameters of the statistical model based on the extracted set of scenario parameters, where the locally updated model set of parameters are indicative of a statistical distribution associated with the detected scenario. Further, the control circuitry is configured to transmit, to a remote entity comprising the statistical model, the locally updated set of model parameters and a number of samples used to generate the locally updated model parameters. With this aspect of the invention, similar advantages and preferred features are present as in the previously discussed first aspect of the invention.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

### BRIEF DESCRIPTION OF THE DRAWINGS

Further objects, features and advantages of embodiments of the invention will appear from the following detailed description, reference being made to the accompanying drawings, in which:
Fig. 1 is a schematic flow chart representation of a method for monitoring and managing an ADS of a plurality of ground vehicles for execution in a central computing system, and of a method for monitoring and managing an ADS for execution in a ground vehicle in accordance with an embodiment of the present invention.
Fig. 2 is a schematic flow chart representation of a method for monitoring and managing an ADS of a plurality of ground vehicles for execution in a central computing system in accordance with an embodiment of the present invention.
Fig. 3 is a schematic flow chart representation of a method for monitoring and managing an ADS of a ground vehicle for execution in the ground vehicle in accordance with an embodiment of the present invention.
Fig. 4 is a schematic perspective view of a system for monitoring and managing an ADS of a plurality of ground vehicles, and of a system for generating the statistical data in accordance with an embodiment of the present invention.
Fig. 5 is a schematic side view of a vehicle comprising a system for monitoring and managing an ADS of a ground vehicle in accordance with an embodiment of the present invention.

### DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present invention is described in terms of a method, it may also be embodied in one or more processors and one or more memories coupled to the one or more processors, wherein the one or more memories store one or more programs that perform the steps, services and functions disclosed herein when executed by the one or more processors.

Herein, the term ADS or autonomous driving feature may refer to any arbitrary ADS, ADAS or autonomous driving feature, e.g. as already known in the art and/or yet to be developed, with the addition of a scenario identifier module which may be an integrated part of the ADS or a peripheral system/module/feature deployed in the vehicle.

An Operational design domain (ODD) is to be understood as a description of the operating domains in which an automated or a semi-automated driving system (i.e. AD or ADAS) is designed to function, including, but not limited to, geographic, roadway (e.g. type, surface, geometry, edges and markings), environmental parameters, connectivity, surrounding objects, traffic parameters, and speed limitations.

The following description pertains to a solution or a framework whose objective is to ensure a safe performance of Automated Driving Systems (ADSs). In more detail, the present inventors realized that that the ADSs should be monitored once they are lunched on to public roads. However, given today's technologies, monitoring of ADS means transferring a large volume of sensor data to a central entity in order to check the validity of the "environmental model" used in design time to define the ODD. Assuming that the size of the ADS fleet will increase rapidly in the future solutions relying on sending raw sensor data deem to be infeasible. In addition, in some legislations the data cannot exit the country, which adds another hurdle for building a world-wide platform. To this day there are some solutions for reducing the data volume that are based on metrics to automatically identify informative parts of sensor data. However, such solutions may still be insufficient for the purpose of updating the model that is used for safety assurance of the ADS because updating that model often requires the access to the entire sensor data from the ADS fleet. The term safety assurance may in the present context be understood as a verification procedure where one verifies that the ADS is operating in an environment for which it has been designed and verified.

Accordingly, it is herein proposed to utilize a statistical model for safety assurance of the ADS and to deploy the statistical model into all ADSs in the fleet. This enables the use of entire sensor data sets to update the statistical model (that ensures an up-to-date understanding of the operating environment of the ground vehicle) without sending the entire sensor data sets. In more detail, this is enabled by using the entire sensor data in order to update the statistical models, locally in each vehicle, and then transfer the updated statistical model (or only the updated parameters) to the central system, aggregate the plurality of local updates, and from there construct a global statistical model. Accordingly, this opens up the opportunity to frequently update the model used for safety assurance, without sharing sensor data, which saves enormous amounts of bandwidth and is furthermore particularly advantageous in countries where such data cannot be shared due to local legislations. In other words, it is possible to aggregate the required information in compliance with any data privacy acts. In other words, by means of the herein proposed methods and systems it is possible to enable multiple parties to build a common and robust machine learning model for monitoring and managing an ADS fleet without sharing "data", thus addressing critical issues such as data privacy, data security, data access rights and access to heterogeneous data. This may also be referred to as federated learning of the model used for safety assurance of the ADS.

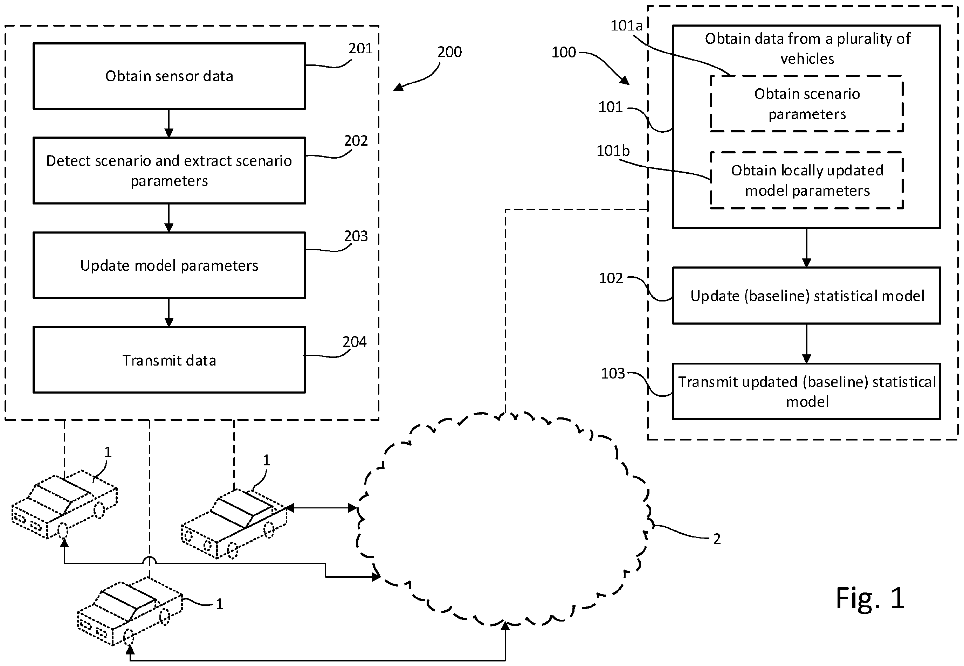

Moving on, Fig. 1 is a schematic illustration depicting a method 100 for monitoring and managing an Automated Driving System (ADS) of a plurality of ground vehicles (i.e. server-side) and a method 200 for monitoring and managing an ADS of a ground vehicle (i.e. vehicle-side) in accordance with an embodiment of the present invention. The two methods 100, 200 serve to provide a framework for keeping the ADS of a ground vehicle 1 operating in conditions that it has been developed and verified for and thereby reduce the risk for the vehicle occupants as well as their surrounding environments.

Accordingly, in accordance with an embodiment of the present invention, Fig. 1 shows a schematic flow chart representation of method 100 for monitoring and managing an Automated Driving System (ADS) of a plurality of ground vehicles 1. In more detail, each ADS comprises a scenario identifier module configured to monitor scenarios in a surrounding environment of each corresponding ground vehicle 1. Moreover, each ADS is associated with a statistical model indicative of a statistical distribution related to a plurality of scenarios detectable by means of the scenario identifier module of each ADS. Preferably, the method 100 is a computer-implemented method, and more specifically, it is preferably implemented in a server-side system 2 configured to transmit and receive data to/from a plurality of "connected" vehicles 1.

In more detail, an online scenario identifier module is deployed onto the ADS of each vehicle 1 in order to be able to update a statistical model based on data from its operation conditions and then share such locally updated statistical models with a central entity in order to build a "global" aggregated statistical model (may also be referred to as a baseline statistical model). The locally updated statistical model parameters may be sent at the time of update, or periodically (e.g. after the completion of a driving session) given that there is an available communication path to the central entity/server.

A "statistical model" may accordingly be understood as a description of what the ADS can statistically expect from its operating environment. In more detail, from the start one can model a set of field data by different segmentation and quantification methods (which herein is referred to as "scenario identification"). In other words, the outcome of the scenario identification is a set of scenario parameters, and the statistical model is obtained by modelling the scenarios identified in the field data. Thus, a statistical model may be understood as a mathematical representation of a statistical distribution. In more detail, the statistical model of the ADS's operational environment quantifies what the ADS can expect from its surroundings in a statistical way. The statistical model provides a probability measure for all scenarios (e.g. overtaking, pedestrian crossings, animal crossings, other road users' behaviours, etc.) that are probable to happen within the operating environment. Thus, in order to statistically describe an operational environment of the ADS, the statistical distributions corresponding to all scenarios may be pooled together in order to form a "global" statistical distribution for the entire operational environment. The statistical model may for example have a hierarchical structure.

In an example implementation, the statistical model can then feed information into the design process to define what integrity different parts of the ADS needs to operate with, and additionally the statistical model may be used to define the ODD of the ADS. Thus, if the ADS is then implemented to the integrity defined through these statistical models it can be argued that the ADS will be statistically safe. However, in that case it is crucial that the statistical model is also valid at all times during the ADS's operation. When constructing the statistical model, one may need to consider confidence estimates and use conservative numbers for all the different values that goes into the safety argumentation and design of the ADS. This approach, in contrast to the traditional way of posing hard limits or ranges for different values, may allow for a design that solves the real challenge without unnecessary margins.

The ADS is preferably, but not necessarily, an ADS of level 3 or higher according to the SAE J3016 levels of driving automation, such as for example a highway pilot feature, a traffic jam pilot feature, or the like. Herein, the term ADS or autonomous driving feature may refer to any arbitrary ADS, ADAS or autonomous driving feature, e.g. as already known in the art and/or yet to be developed, with the novel addition of a scenario identifier module which may be an integrated part of the ADS or a peripheral system/module/feature deployed in the vehicle.

In the present context, the term "scenario" refers to an event, a series of events or a situation. The term scenario may relate to any traffic situation, the term scenario is not exclusive to unexpected or unusual traffic situations. In some examples a scenario may be a series of states relating to becoming overtaken by a vehicle. In some examples a scenario may be a series of states relating to overtaking another vehicle. In some examples a scenario may be a series of states relating being cut off by another vehicle. In some examples a scenario may be a series of states relating to another vehicle breaking aggressively. In some examples a scenario may a state of stationary vehicles in all lanes. In more detail, a scenario may be understood as scenario is a description of the temporal development between several scenes in a sequence of scenes where a scene refers to a snapshot of the environment including the scenery (e.g. rain, fog, pot holes, etc.), dynamic elements, and all actor and observer self-representations, and the relationships between those entities.

Moving on, the method 100 comprises obtaining 101 data from each of a plurality of ground vehicles 1. The obtained 101 sensor is indicative of a set of locally updated model parameters of the statistical model, where the locally updated model parameters are indicative of a statistical distribution associated with a detected scenario.

In other words, the method 100 comprises obtaining 101b the set of locally updated model parameters of the statistical model. Moreover, the obtained 101b set of locally updated model parameters may comprise the number of samples used to generate the set of locally updated model parameters. In some examples, the number of samples used to generate the set of locally updated model parameters relates to a number of time units of sensor measurements. In some examples, the number of samples used to generate the externally updated set of model relates to a number of detected scenarios. The term obtaining is herein to be interpreted broadly and encompasses receiving, retrieving, collecting, acquiring, and so forth.

However, in some embodiments the method 100 may further comprise obtaining 101a the set of extracted scenario parameters from the plurality of vehicles. Alternatively, in some embodiments, the method 100 may comprise obtaining 101a the set of extracted scenario parameters from the plurality of vehicles without obtaining 101b the set of locally updated model parameters. In some situations, e.g. where there are no strict bandwidth limitations or data privacy restrictions, it may be advantageous to obtain 101a the set of extracted scenario parameters as they are more informative of the detected scenario than the corresponding model parameters. Thus, the scenario parameters would allow of a more in-depth analysis (performed offline by the central system), which may be valuable in order to increase the understanding of the statistical distribution.

Further, the method 100 comprises updating 102 the statistical model based on the obtained 101 data. The step of updating 102 the statistical model may be understood as a step of applying the obtained 101 data points to the existing statistical model so to generate an updated statistical model, which accordingly then further comprises up-to-date information related to the probabilities of various scenarios and events within an operating environment of the ADS. For example, if the obtained 101 data indicated an increased (i.e. significantly more than "expected") number of speeding vehicles within a specific geographical area this will be reflected in the updated statistical model.

Next, the method 100 comprises transmitting 103 data indicative of the updated statistical model to the plurality of ground vehicles 1. Thereby, the plurality of ground vehicles are provided with an up-to-date statistical model such that the ADS of each vehicle 1 is provided with the means to "understand" what it can statistically expect in various environments and adapt accordingly. The adaptation may for example manifest in inhibition of one or more ADS features, or adjustments of operational margins (e.g. speed limits, distance to lead vehicles, overtaking manoeuvres, etc.). In more detail, by utilizing the statistical model, the ADS of each vehicle may adapt certain ADS features (e.g. highway pilot, traffic jam pilot, Adaptive Cruise Control, etc.) to operate differently in different geographical areas in order to reduce risk exposure to certain hazardous scenarios.

For example, if the updated statistical model indicates that there is an increased probability of some risk scenario (e.g. animal crossings) on a specific road segment, then the ADS may be configured to adapt accordingly by for example reducing the maximum allowable speed for that road segment, or inhibiting fully-autonomous features completely for that road segment. In the latter case it is assumed that the ADS is not equipped to handle such a risk scenario wherefore a hand-over procedure may be initiated to the driver/occupant of the vehicle when approaching that road segment. The statistical model may accordingly be utilized to determine if the conditions and/or requirements of the operational design domain are met, whereby the ADS validity may be determined.

Moreover, the utilization of statistical models provides for a harmonized and efficient means to use the same framework both design-time and run-time, i.e. both for defining the ODD for the ADS as well as for asserting that the ADS is operating in an environment fulfilling the ODD. This facilitates the overall development of autonomous features, the management of the ADS, as well as the verification process. Moreover, by using statistical models, a computationally efficient and bandwidth efficient means for sharing crucial information between ADS equipped vehicles and a central entity is provided. Stated differently, the utilization of statistical models as per the present invention (the same statistical models that have been used to define the ODD for the ADS) allows for more bandwidth-efficient overall system management as compared to sharing raw sensor data and processing the same.

From the other perspective (i.e. from the vehicle-side), Fig. 1 also illustrates a schematic flow chart representation of a method 200 for monitoring and managing the ADS of a ground vehicle 1 in accordance with an embodiment of the present invention. As mentioned, the ADS comprises a scenario identifier module configured to monitor scenarios in a surrounding environment of each corresponding ground vehicle 1, and the ADS is associated with a statistical model indicative of a statistical distribution related to a plurality of scenarios detectable by means of the scenario identifier module of the ADS.

The method 200 comprises obtaining 201 sensor data comprising information about a surrounding environment of the vehicle. The sensor data may for example be obtained 201 from a perception system and/or a localization system of the vehicle. A perception system is in the present context to be understood as a system responsible for acquiring raw sensor data from on sensors such as cameras, LIDARs and RADARs, ultrasonic sensors, and converting this raw data into scene understanding. Naturally, the sensor data may be received directly from one or more suitable sensors (such as e.g. cameras, LIDAR sensors, radars, ultrasonic sensors, etc.). The localization system may for example be in the form of a Global Navigation Satellite System (GNSS) such as e.g. a GPS unit.

Further, the method 200 comprises detecting 202, by means of the scenario identifier module, a scenario in the surrounding environment based on the obtained sensor data and extracting a set of scenario parameters indicative of the detected scenario. In more detail, while driving, the ADS is exposed to a multitude of different scenarios and situations. Having a detailed understanding of these is advantageous in order to be able to construct a safe yet performant self-driving system. One way of achieving such an understanding is by creating "models" of the environment. These "models" can be created using a system that is able to characterise the events and scenarios around the ADS into a "scenario model" and further measure and quantify them. This system is herein referred to as a scenario identifier module whose output is not only the identified but also the quantified scenarios. Quantified scenarios could comprise everything from trajectories of surrounding traffic to the amount of rain or different road characteristics.

In one example situation, the scenario may be an external vehicle overtaking the ego-vehicle 1. Accordingly, the scenario identifier module is configured to detect this scenario and to extract a set of scenario parameters indicative of this scenario. For this example situation the set of scenario parameter may be an initial position of the external vehicle relative to the ego-vehicle 1, an initial speed of the vehicle, a trajectory of the external vehicle, a road geometry, road conditions, weather conditions, and so forth. Moreover, the scenario identifier module may further be operatively connected to a memory device acting as a buffer that records and stores a set of states over time based on the obtained sensor data. Accordingly, the scenario identifier module may be configured to use the stored set of states in order to "detect" the scenarios and generate the scenario parameters. In other words, the buffer is used as input to the scenario identifier module in order to identify the entire evolution of a scenario once the whole scenario has been "experienced". In other words, the buffer comprising the "current" states over time are post-processed after the entire scenario/event has evolved. Thus, the scenario identifier module may be configured to generate the scenario parameters after the actual scenario has occurred in order to identify the actual scenario once it has happened. Thus, by having a buffer of the "observations" in the surrounding environment, the scenario identifier module may be configured to analyse the buffer during operation of the vehicle in order to classify and quantify the scenarios.

Further, the method 200 comprises, locally updating 203 a set of model parameters of the baseline statistical model based on the extracted set of scenario parameters in order to obtain a locally updated statistical model, the locally updated 203 set of model parameters being indicative of a statistical distribution associated with the detected scenario. Accordingly, the locally updated statistical model may comprise at least part of the baseline statistical model updated by said set of model parameters.

The method 200 further comprises transmitting 204, to a remote entity comprising the (baseline) statistical model, the locally updated set of model parameters and a number of samples used to generate the locally updated set of model parameters.

Accordingly, as mentioned the statistical model could be used to define the ODD of the ADS design-time, and a well-defined and up-to-date statistical model may be important to build a safe case for deployment of ADSs onto public roads. In other words, it is advantageous to have an up-to-date understanding of the environment in order to see where the ODD is valid in the "real world".

However, in some embodiment, the method 200 further comprises transmitting 204, to a remote entity, the set of extracted scenario parameters of the detected scenario. The scenario parameters may be transmitted 204 in addition to the updated set of model parameters or without any transmission of the updated set of model parameters. As mentioned, in some situations, e.g. where there are no strict bandwidth limitations or data restrictions, it may be advantageous to obtain 101a the set of extracted scenario parameters as they are more informative of the detected scenario than the corresponding model parameters. Thus, the scenario parameters would allow of a more in-depth analysis (performed offline by the central system).

In summary, in defining the automated driving system (ADS) it may be crucial to have a good understanding of the challenge that it will face when operating. Such models can be either based on physical limits, idealistic rules or statistical models of the environment. Where the physical models will ensure absolute safety, they will likely yield an ADS that will remain at standstill and the "rule-based" approach risks having omitted cases that are indeed occurring during operations of the ADS and thus might pose considerable safety risk.

It was however realized by the present inventors that the statistical models on the other hand provides a good means to create a performant yet safe ADS. If these statistical models are used in the safety argumentation of the ADS as well as being a foundation for the design and implementation of the ADS, it is crucial that they are indeed correct. Moreover, the statistical models will allow the ADS to be developed with sufficient integrities in different parts of the system solution, each ensuring that, given the statistics, the ADS will be safe according to some safety norm. However, if such an approach is deployed it is important that the model properly reflects reality.

Thus, in order to make the statistical models accurately reflect reality it is important to keep them updated especially after launch of ADS onto public roads which might tremendously change the traffic dynamics. It is herein proposed to get this data through crowd sourcing from a plurality of ADS vehicles in a fleet.

However, it is not possible or at least not practically feasible to send the raw sensor data due to the huge amounts of information processed by the ADS. Neither is it viable to send even intermediate data representations of the world, e.g., object-level data, if the entire drives are to be transmitted for offline processing in a "cloud".

Thus, by having the identified scenarios on the same format as the ones used to build the statistical model used for safety assurance and potentially even to construct the ODD of the ADS, one is provided with two better options, depending on the available transmission capacity, to keep these models updated. Namely, to send all the classified and quantified scenarios from the drive (i.e. scenario parameters) or to make use of the scenario parameters in order to locally update the statistical model online (in-vehicle) and then only transmit the updated model parameters with the number of samples used to make the update.

This drastically reduces the need for immense amounts of bandwidth and storage capacity to build and maintain the framework used for safety assurance of the ADS. In some embodiments, only the locally updated set of model parameters are transmitted from the vehicles to the central entity. Given the current state of available communication means (network capacity, bandwidth, latency, etc.) this is the more cost-effective option. In addition, since the storage requirements are basically the same as those needed to keep the model in the system to begin with, this approach also ensures that relevant data does not need to be discarded due to lack of on-board storage.

Accordingly, by means of the herein proposed solution, one can utilize all of the "observed" scenarios and associated data, instead of applying some type of filtering/selection algorithm which discards some data entries due to lack of storage or bandwidth capability, which is the case for some conventionally known solutions. In more detail, if raw sensor data is sent it is likely that not the full "experience" of a driving session is sent to the "cloud" for further processing, but instead some specific data entries are selected which increases the risk of making erroneous conclusions of the real-world situation and therefore generate an inferior reflection of reality.

After the information is received by the "cloud"/back-office, the model parameter updates from all vehicles are incorporated in the (baseline) statistical model. The updates of the (baseline) statistical model may then advantageously be used for one or more of the following purposes:
- Update ADS implementations (e.g. adding new features/capabilities) according to the more refined statistical models and send these updates to the fleet.
- Reduce the margins of the ADS according to the more refined statistical models, meaning that the ADS can operate less cautiously.
- Increase the verified integrity of the ADS.
- Inhibition of activation of the ADS in specific geographical areas if the updated model found to be noticeably different from the previous model, which was used for implementing the ADS in the first place. In other words, future activations of the ADS may be inhibited by sending such a message to the ADSs in the fleet. As the model is likely split across different usage areas (like countries or similar) such an inhibition is preferably only valid for the affected geographical areas.

Moreover, it should be noted that the statistical model may comprise information about only a small subset of (geographical) areas of all of the (geographical) areas of the ADS's operational environment. More specifically, the statistical model comprises information about the entire operational environment defined by the ODD of the ADS. However, due to its (possibly hierarchical) structure, one may extract information of only a small subset of areas of all of areas of the operational environment of the ADS. Thus the inhibition might not be of the ADS in the all of the areas, just in the parts where the (now updated) statistical model indicates that the operating environment is no longer fulfilling the ODD. In more detail, the ODD may be construed as a "static" (defined in design-time) set of conditions/requirements whereas the statistical model with its statistical distribution is used to judge where these conditions are met at specific geographical areas. So, one might have one statistical distribution or even a model for a first geographical area or a first road type, and another model/distribution for a second geographical area or a second road type. An alternative way of viewing this is that the statistical model is further indicative of both time (of day) as well as geographic position. Accordingly, the outcome from the model being judged to be outside the ODD (i.e. the updated model indicating a deviation from the ODD requirements) may thus only be something that affects the time and geographic areas where that exceedance happens. Therefore, there is no need to inhibit in all of the areas of the ADS operational environment, but it is sufficient to inhibit in the places where the statistical model indicates that the conditions of the ODD are not fulfilled. An operational environment of the ADS may be understood as all of the environments that the ADS may operate in while an operating environment is a current environment that the ADS is operating in (i.e. a subset of the entire operational environment).

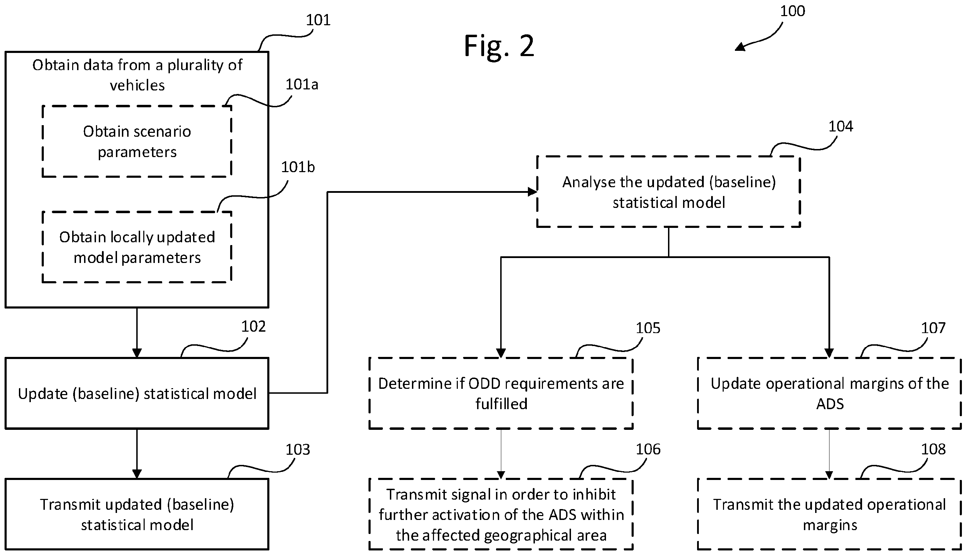

Further details related to the method 100 for monitoring and managing an ADS of a plurality of ground vehicles will now be discussed in reference to Fig. 2 that illustrates a schematic flow chart representation of the method 100. As some features of the method 100 already have been discussed in reference to Fig. 1 in the foregoing, the disclosure in reference to Fig. 2 will therefore for the sake of brevity and conciseness mainly be focused on the undisclosed parts of the method 100. Stated differently, Fig. 2 shows a schematic flow chart of a method 100 for execution by a central system communicatively connected to a plurality of ground vehicles, where each ground vehicle has an ADS, in accordance with an embodiment of the present invention.

Accordingly, the method comprises obtaining 101 data from each of a plurality of ADS equipped vehicles, where the data comprises a set of locally updated model parameters of the statistical model, where the locally updated model parameters are indicative of a statistical distribution associated with a detected scenario.

The method further comprises updating 102 the statistical model based on the obtained data, i.e. updating the statistical distribution that is modelled by the statistical model in order to account for the newly observed and quantified scenarios. Moreover, the statistical model may further comprise a temporal parameter indicative of a time period within the geographical area. In other words, the statistical model as used herein indicates the probabilities of certain scenarios "happening" at particular geographical regions at specific time periods. The geographical data and temporal data may be inherently incorporated in the "statistical models". For example, the statistical model may have one general statistical distribution associated with a specific scenario (e.g. an "aggressive cut-in scenario") for a specific geographical location, another statistical distribution indicative of how the "aggressive cut-in scenario" is distributed over a day, another statistical distribution indicative of how the "aggressive cut-in scenario" is distributed over a week day, and so forth. Alternatively, all of these geographical and temporal parameters may be indicative in one statistical distribution associated with the "aggressive cut-in scenario" by extending the number of dimensions of the function (which is used to define the model).

Further, the method 100 comprises analysing 104 the updated 102 statistical model, where the analysis 104 may take different forms depending on the application. In more detail, as mentioned in the foregoing, the updated 102 statistical model may be used for a multitude of purposes such as e.g. verification integrity, updating of the ADS implementation, updating operational margins, or inhibition due to safety concerns, some of which will be exemplified in more detail below.

Accordingly, assuming that it is possible to differentiate probabilities of certain scenarios within different geographical areas and specific time periods, the analysis 104 of the updated statistical model may comprise a step of comparing the updated 102 statistical model against a set of predefined requirements for the ODD. In a more illustrative example, the predefined requirements for the ODD may for example specify a threshold for the probability of cyclist overtaking a vehicle, a threshold for the probability of "obstructed pedestrian crossings". These two examples may be considered "edge case scenarios", i.e. scenarios that have a low probability to occur, but are associated with high efforts to identify and confirm performance. Thus, the specification of the ODD for the ADS may require that these two scenarios occur with a sufficiently low probability for the ADS to be allowed to operate. However, the comparison between the updated 102 statistical model and these predefined requirements may accordingly reveal that the probability for these "edge case scenarios" is higher than the threshold at a specific geographical area (i.e. a specific road segment) and appropriate measures may accordingly be taken.

Thus, in some embodiments, the method 100 comprises determining 105 if the updated 102 statistical model indicates that the predefined requirements for the ODD are not fulfilled within the geographical area based on the comparison. Then, if the updated statistical model indicates that the predefined requirements for the ODD are not fulfilled within the geographical area, the method 100 may further comprise transmitting 106 a signal to the plurality of ground vehicles, the signal being indicative of an instruction to inhibit activation of the ADS within the (affected) geographical area. Accordingly, by means of the proposed method 100 one can capture all of the events that the ADS is exposed to in order to update the "global" statistical model and use it for safety assurance of all the ADSs in the vehicle fleet.

Moreover, in some embodiments, the ADS (of the vehicle fleet) comprises a set of operational margins, and the method 100 further comprises updating 107 the set of operational margins based on the updated 102 statistical model. The operational margins may for example be in the form of speed limits, distance to lead vehicle, allowable gap size for overtaking of other vehicles, etc. Furthermore, the method 100 comprises transmitting 108 a signal indicative of the updated set of operational margins of the ADS to the plurality of ground vehicles. In other words, an update of the ADS may be rolled out over a whole vehicle fleet. Accordingly, due to the increased knowledge of the various probabilities for certain scenarios it is possible to continuously re-assess various operational margins of the ADS and adapt them accordingly. This provides for a more efficient development and dynamic adaptation of the ADS operational margins which in the end provides for a better end-product increasing user satisfaction and overall road safety. Moreover, as mentioned, the information from the statistical model may serve as valuable input in the design-phase of the ADS in order to focus on the "right" scenarios (i.e. scenarios which the ADS is likely to be exposed to).

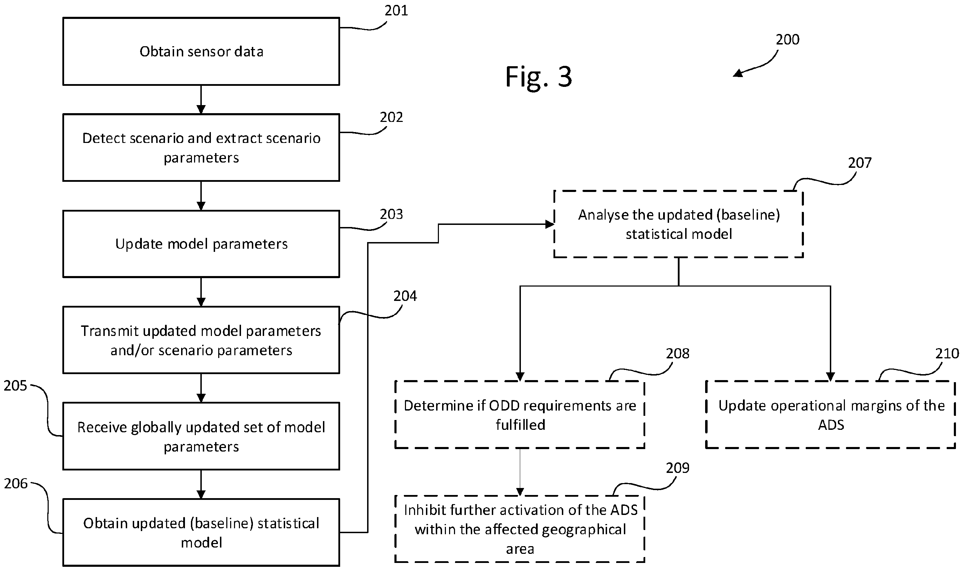

Moving on, Fig. 3 is a schematic flow chart representation of a method 200 for monitoring and managing an ADS of a ground vehicle. As before, the ADS comprises a scenario identifier module configured to monitor scenarios in a surrounding environment of the ground vehicle, and the ADS is associated with a statistical model indicative of a statistical distribution related to a plurality of scenarios detectable by means of the scenario identifier module. Accordingly, Fig. 3 depicts the interrelated vehicle-side implementation of the framework proposed herein. Stated differently, Fig. 3 shows a schematic flow chart of a method 200 for execution by a vehicle control system of a ground vehicle, where the ground vehicle comprises an ADS, in accordance with an embodiment of the present invention.

Accordingly, as before, some of the features of the method 200 has already been discussed in detail in reference to Fig. 1 and will for the sake of brevity and conciseness be omitted in the following. Nevertheless, the method 200 comprises obtaining 201 sensor data comprising information about a surrounding environment of the ground vehicle. Then, a scenario in the surrounding environment is detected 202 based on the obtained sensor data and a set of scenario parameters indicative of the detected scenario are extracted by means of the scenario identifier module. Furthermore, the method 200 comprises locally updating 203 a set of model parameters of the statistical model based on the extracted set of scenario parameters. The locally updated set of model parameters are indicative of a statistical distribution associated with the detected scenario.

Further, the method 200 comprises transmitting 204, to a remote entity comprising the statistical model, the locally updated set of model parameters and a number of samples used to generate the locally updated set of model parameters.

The transmission 204 of data may for example be performed after the completion of a driving session when the vehicle is parked. However, in general the transmission 204 of data in order to construct the "global" statistical model is sent with some (predefined) frequency. For example, when the ADS is launched in a new geographical area it may be necessary to update the baseline statistical model at the central entity with a higher frequency than when the ADS has "matured".

Further, the method 200 comprises obtaining 205 a globally updated set of model parameters of the statistical model from the remote entity, and (locally) updating 206 the (baseline) statistical model based on the obtained 205 globally updated set of model parameters in order to obtain an updated (baseline) statistical model. In other words, the method 200 comprises forming 203 first (local) update of the statistical model based on scenarios that the vehicle is exposed to, and providing this data to a central entity. The central entity in turn receives data from a whole fleet of vehicles, and aggregates this in order to perform a "global" update of the baseline statistical model that is subsequently rolled out to the whole fleet of vehicles.

Analogously as discussed in reference Fig. 2, the updated (baseline) statistical model may advantageously be used for one or more similar purposes. In other words, some of the steps of the method discussed in reference to Fig. 2 may be performed locally in the vehicle instead of centrally. This may be advantageous in scenarios where the ADS is configured differently for different types of vehicles and local specifications may warrant different measures in different vehicles. For example, the ADS of a truck may be configured with different safety margins as compared to the ADS for a car due to different safety considerations. Accordingly, the method 200 may comprise a step of analysing 207 the updated (baseline) statistical model, where the analysis 207 may comprise a step of comparing the updated statistical model against a set of predefined requirements for the ODD of the ADS.

Then, a check may be performed in order to determine 208 if the updated statistical model indicates that the predefined requirements for the ODD are not fulfilled within a specific geographical area based on the comparison. Accordingly, if the updated statistical model indicates that the predefined requirements for the ODD are not fulfilled within the specific geographical area, the method 200 further comprises a step of inhibiting 209 activation of the ADS within the geographical area. Furthermore, as a consequence of the analysis 207, in some embodiments the method 200 comprises updating 210 a set of operational margins of the ADS based on the updated statistical model.

Executable instructions for performing these functions are, optionally, included in a non-transitory computer-readable storage medium or other computer program product configured for execution by one or more processors.

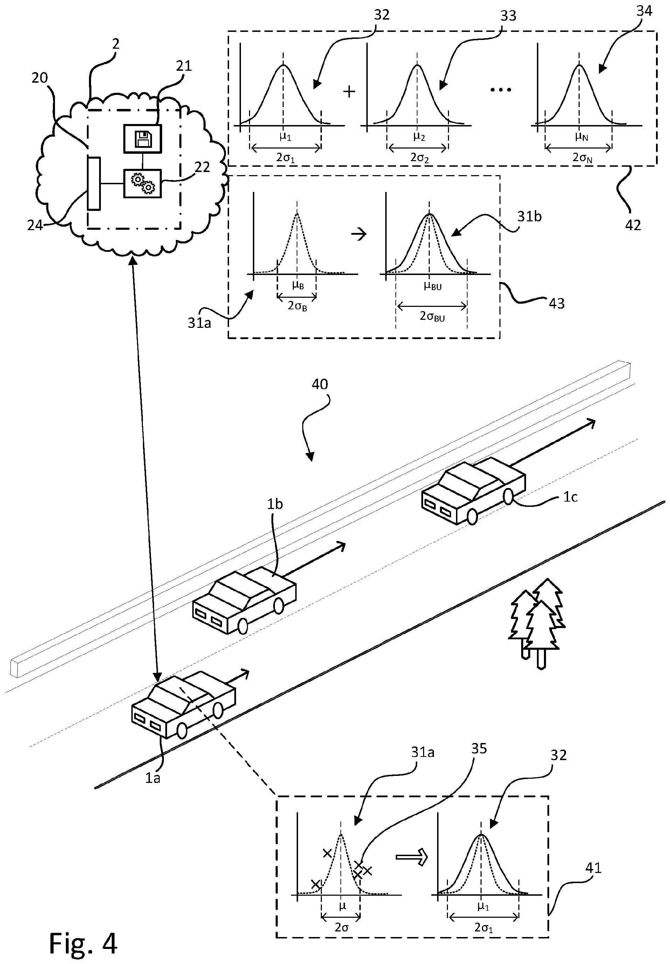

Fig. 4 is a schematic perspective view illustration of a system 20 for monitoring and managing an ADS of a plurality of vehicles 1a in accordance with an embodiment of the present invention. One of the ADS-equipped vehicles 1a is traveling on a controlled access dual carriageway, i.e. a motorway or a freeway, and the ADS may for example be in the form of a highway pilot. Moreover, the ADS comprises a scenario identifier module configured to monitor scenarios in a surrounding environment of the ADS-equipped vehicle 1a. Moreover, the ADS is associated with a statistical model indicative of a statistical distribution related to a plurality of scenarios detectable by means of the scenario identifier module. The system 20 comprises one or more processors 21, a memory 22, and a communication interface 24, and any other conventional components/functions required for performing the method disclosed herein.

One such statistical distribution of the baseline model is represented by the broken line normal distribution, denoted by reference numeral 31a, which in the following will be referred to as the "baseline statistical model". As the skilled reader readily understands the baseline statistical model may be fitted to and be indicative of a plurality of such and/or other statistical distributions indicative of various statistical probabilities of environmental scenarios associated with the current environment of the vehicle 1a. Furthermore, other probability distributions than normal distributions may be included in the baseline statistical model, the normal distribution depicted in the example embodiment illustrated in Fig. 3 is used to elucidate the teachings proposed herein in a clear and concise manner.

Moving on, the vehicle 1a comprises a memory having the baseline statistical model (as well as any updates of the same) stored therein. Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

As the vehicle 1a is traveling on the freeway, a multitude of scenarios are detected by means of the scenario identifier module of the ADS of the vehicle 1a. In the illustrated embodiment, the scenarios includes an overtaking/passing vehicle 1b. In more detail, the scenario identifier module is configured to detect and extract a set of scenario parameters indicative of the detected scenario, i.e. to quantify the scenario. For example, the scenario parameters may comprise an "initial" position of the target vehicle 1b, a trajectory of the target vehicle 1b, lane changes of the target vehicle 1b, an average speed of the target vehicle 1b during the scenario (indicated by the arrows extending from the front of each vehicle 1a - 1c), current traffic rules, positions of other vehicles 1c relative to the target vehicle 1b, geographical position of the vehicle 1a, signage in the surrounding environment, road surface texture, weather parameters, and so forth.

The quantified scenario, i.e. the extracted scenario parameters are then used to locally update a set of model parameters, here in the form of a mean value (or expectance value) µ and a standard deviation value σ. The process of locally updating the statistical model is schematically illustrated in the broken-line box 41. In more detail, the extracted scenario parameters of a scenario result in a statistical data point 35 in the statistical distribution (or in one of the sub-distributions forming the "global" statistical distribution) modelled by the baseline statistical model 31a. Accordingly, the set of model parameters of the baseline statistical model 31a are locally updated, i.e. the associated statistical distribution for the detected scenario, is locally updated based on the extracted set of scenario parameters in order to obtain a locally updated statistical model 32. The locally updated statistical model 32 represents a statistical distribution defined by the parameters µ₁ and σ₁, which indicates that the standard deviation is larger in the locally updated statistical model 32 than in the baseline statistical model 31a, which may be an indication that the baseline statistical model 31a may be inaccurate for that road segment 40.

Moreover, the locally updated statistical model 32 is updated based several measurement samples 35 in the depicted example embodiment. In the illustrated embodiment, the depicted statistical models indicate the probability of various delta velocities on this particular road segment 40. A delta velocity may be understood as a relative difference in speed between the measuring vehicle 1a and the target vehicle 1b, and accordingly provides information about the behaviour of other road users for that road segment 40. This set of locally updated model parameters of the statistical model (e.g. µ₁ and σ₁) are then transmitted to a central entity 2 for further processing indicated in the dashed line boxes 42, 43.

Moving on, the system 20 has a memory 22 having the statistical model stored thereon, and control circuitry 21 configured to obtain data from each of a plurality of ground vehicles 1a. The data comprising information about set of locally updated model parameters of the statistical model, as indicated by reference numerals 32 - 34 in box 42. Further, the control circuitry 21 is configured to update the statistical model 31a, 31b as indicated in box 43.

Going along with the example of delta velocities, the updated baseline statistical model 31b indicates that there is a larger variance of delta velocities for the road segment 40. Assuming that this variation exceeds the allowable variation defined by the ODD of the ADS, the control circuitry 21 may be further configured to transmit a signal to the plurality of ground vehicles 1a, where the signal is indicative of an instruction to inhibit activation of the ADS within the geographical area 40. In more detail, if one assumes that the ADS has been developed and verified for operation on a controlled access highway with a dual carriageway where the delta velocity is expected to be below a predefined value with a certain probability. However, in view of the newly obtained statistical distribution it can be concluded that the affected road segment 40, and the statistical model's description 31b of the same does not fulfil the predefined requirements of the ODD, wherefore activation of the ADS at that road segment is at least temporarily inhibited. Thereby one can minimise the risk of exposing the ADS to situations or scenarios that it has not yet been designed and verified for, and accordingly improve the overall road safety.

From a different perspective, the updated baseline statistical model 31b can be used as valuable input for the design and further development of the ADS in order to realize what parts of the ADS should be prioritized in a planned update of the ADS software. As a consequence the ODD coverage of the ADS may be accelerated leading to a better end-product and consequently an increased user satisfaction.

Further, as previously mentioned, the "baseline statistical model" 31a may be construed as a statistical model that is indicative of a statistical distribution that quantify the world around the vehicles, which in turn are used to assert that a particular region (geographical region, road portion, etc.) fulfils the requirements of the ODD. Thus, even if the illustrated example is simplified by using normal distributions of one single variable, the working principles of the subject-matter of the invention are elucidated. In more detail, the statistical model used to describe the world around the vehicle, and what it can "expect" from its surroundings, may have several parameters and be more complex than the illustrated embodiment.

The illustrated scenario in Fig. 4 is merely one of several examples that can be used to elucidate the concepts disclosed herein. Another example would be a traffic-jam scenario, where a particular geographical area has exhibited a high amount of pedestrians crossing traffic illegally (i.e. jaywalking). This increase in the amount of "jaywalking" scenarios would then be indicated in the statistical distribution associated with that geographical area whereby the ADS-equipped vehicles 1a could be instructed to inhibit activation of a traffic jam pilot in that geographical area assuming that the increased amount of jaywalking scenarios resulted in a deviation from the baseline statistical model above a threshold. Another example scenario would be a number of ADS-equipped vehicles detecting an increased number of wild-life (e.g. deer, wild boar, bears, etc.) crossings at a particular road portion, resulting in a statistical anomaly deviating from the baseline statistical model.

In more detail, the vehicle 1a may be connected to external network(s)/entities 2 via for instance a wireless link (e.g. for transmitting/receiving data). The same or some other wireless link may be used to communicate with other vehicles 1b, 1c in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

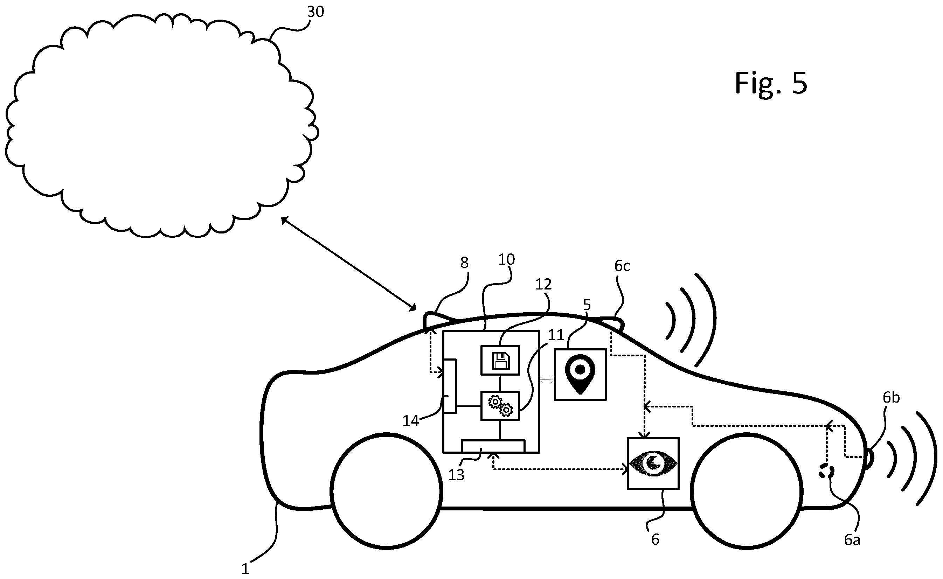

Further, Fig. 5 is a schematic side view of a vehicle 1 comprising a control system 10 for monitoring and managing an Automated Driving System (ADS) of the vehicle 1. The ADS comprises a scenario identifier module configured to monitor scenarios in a surrounding environment of the ego-vehicle 1. Moreover, the ADS is associated with a statistical model indicative of a statistical distribution related to a plurality of scenarios detectable by means of the scenario identifier module. The vehicle 1 further comprises a perception system 6 and a localization system 5. A perception system 6 is in the present context to be understood as a system responsible for acquiring raw sensor data from on-board sensors 6a, 6b, 6c such as cameras, LIDARs and RADARs, ultrasonic sensors, and converting this raw data into scene understanding. The localization system 5 is configured to monitor a geographical position and heading of the vehicle, and may in the form of a Global Navigation Satellite System (GNSS), such as a GPS. However, the localization system may alternatively be realized as a Real Time Kinematics (RTK) GPS in order to improve accuracy.

In more detail, the perception system 6 may refer to any commonly known system and/or functionality, e.g. comprised in one or more electronic control modules and/or nodes of the vehicle 1, adapted and/or configured to interpret sensory information - relevant for driving of the vehicle 1 - to identify e.g. obstacles, vehicle lanes, relevant signage, appropriate navigation paths etc. The exemplified perception system 6 may thus be adapted to rely on and obtain inputs from multiple data sources, such as automotive imaging, image processing, computer vision, and/or in-car networking, etc., in combination with sensory information. Such exemplifying sensory information may for instance be derived from one or more optional surrounding detecting sensors 6a-c comprised in and/or provided on-board the vehicle 1. The surrounding detecting sensors 6a-c may be represented by any arbitrary sensors adapted to sense and/or perceive the vehicle's 1 surroundings and/or whereabouts, and may e.g. refer to one or a combination of one or more of radar, LIDAR, sonar, camera, navigation system e.g. GPS, odometer and/or inertial measurement units.

The system 10 comprises one or more processors 11, a memory 12, a sensor interface 13 and a communication interface 14. The processor(s) 11 may also be referred to as a control circuit 11 or control circuitry 11. The control circuit 11 is configured to execute instructions stored in the memory 12 to perform a method for generating statistical data for managing an ADS of the vehicle 1 according to any one of the embodiments disclosed herein. Stated differently, the memory 12 of the control device 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

In more detail, the memory 12 has the statistical model stored thereon and the control circuitry 11 is configured to obtain sensor data comprising information about a surrounding environment of the ground vehicle 1. Further, the control circuitry 11 is configured to detect, by means of the scenario identifier module, a scenario in the surrounding environment based on the obtained sensor data and extracting a set of scenario parameters indicative of the detected scenario. Then, the control circuitry 11 is configured to locally update a set of model parameters of the statistical model based on the extracted set of scenario parameters. The locally updated model set of parameters are in turn indicative of a statistical distribution associated with the detected scenario, and the control circuitry 11 is configured to transmit, to a remote entity comprising the statistical model, at least one of the following data sets. More specifically, the control circuitry 11 is configured to transmit the extracted set of scenario parameters indicative of the detected scenario, and/or the locally updated set of model parameters and a number of samples used to generate the locally updated model parameters.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform some of the methods presented herein. The cloud computing system may comprise distributed cloud computing resources that jointly perform the methods presented herein under control of one or more computer program products.

The processor(s) 11, 21 (associated with the systems 10, 20) may be or include any number of hardware components for conducting data or signal processing or for executing computer code stored in memory 12, 22. The systems 10, 20 have an associated memory 12, 22, and the memory 12, 22 may be one or more devices for storing data and/or computer code for completing or facilitating the various methods described in the present description. The memory may include volatile memory or non-volatile memory. The memory 12, 22 may include database components, object code components, script components, or any other type of information structure for supporting the various activities of the present description. According to an exemplary embodiment, any distributed or local memory device may be utilized with the systems and methods of this description. According to an exemplary embodiment the memory 12, 22 is communicably connected to the processor 11, 21 (e.g., via a circuit or any other wired, wireless, or network connection) and includes computer code for executing one or more processes described herein
It should be appreciated that the sensor interface 13 may also provide the possibility to acquire sensor data directly or via dedicated sensor control circuitry 6 in the vehicle. The communication/antenna interface 14, 24 may further provide the possibility to send output to a remote location (e.g. remote operator or control centre) by means of the antenna 8 via an external network 30. Moreover, some sensors in the vehicle 1 may communicate with the control system 10 using a local network setup, such as CAN bus, I2C, Ethernet, optical fibres, and so on. The communication interface 14 may be arranged to communicate with other control functions of the vehicle 1 and may thus be seen as control interface also; however, a separate control interface (not shown) may be provided. Local communication within the vehicle 1 may also be of a wireless type with protocols such as WiFi, LoRa, Zigbee, Bluetooth, or similar mid/short range technologies.

Accordingly, it should be understood that parts of the described solution may be implemented either in the vehicle, in a system located external the vehicle, or in a combination of internal and external the vehicle; for instance in a server in communication with the vehicle, a so-called cloud solution, as already exemplified. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention.

Other solutions, uses, objectives, and functions within the scope of the invention as claimed in the below described patent claims should be apparent for the person skilled in the art.

## Claims

1. A method (100) for monitoring and managing an Automated Driving System, ADS, of a plurality of ground vehicles (1), each ADS comprising a scenario identifier module configured to monitor scenarios in a surrounding environment of each corresponding ground vehicle, wherein each ADS is associated with a statistical model indicative of a statistical distribution related to a plurality of scenarios detectable by means of the scenario identifier module of each ADS, the method comprising:
obtaining (101) data from each of the plurality of ground vehicles (1), the data being indicative of:
a set of locally updated model parameters of the statistical model, the locally updated model parameters being indicative of a statistical distribution associated with a detected scenario;
updating (102) the statistical model based on the obtained data;
transmitting (103) data indicative of the updated statistical model to the plurality of ground vehicles (1).

2. The method (100) according to claim 1 wherein the received data is further indicative of a number of samples used to generate each set of locally updated model parameters.

3. The method (100) according to any one of claims 1 or 2, wherein the obtained data is further indicative of a set of extracted scenario parameters of the detected scenario.

4. The method (100) according to any one of the preceding claims, wherein the ADS is configured for an Operational Design Domain, ODD, and wherein the statistical model comprises a geographical parameter indicative of a geographical area within an operational environment of the ADS, the method further comprising:
comparing (104) the updated (102) statistical model against a set of predefined requirements for the ODD;
determining (105) if the updated statistical model indicates that the predefined requirements for the ODD are not fulfilled within the geographical area based on the comparison; and
transmitting (106) a signal to the plurality of ground vehicles (1), the signal being indicative of an instruction to inhibit activation of the ADS within the geographical area, if the updated statistical model indicates that the predefined requirements for the ODD are not fulfilled within the geographical area.

5. The method (100) according to claim 4, wherein the statistical model comprises a temporal parameter indicative of a time period within the geographical area, the method further comprising:
determining (105) if the updated statistical model indicates that the predefined requirements for the ODD are not fulfilled within the geographical area during the time period based on the comparison; and
transmitting (106) a signal to the plurality of ground vehicles, the signal being indicative of an instruction to inhibit activation of the ADS within the geographical area during the time period, if the updated statistical model indicates that the predefined requirements for the ODD are not fulfilled within the geographical area during the time period.

6. The method (100) according to any one of the preceding claims, wherein the ADS comprises a set of operational margins, the method further comprising:
updating (107) the set of operational margins based on the updated statistical model;
transmitting (108) a signal indicative of the updated set of operational margins of the ADS to the plurality of ground vehicles (1).

7. A computer-readable storage medium storing one or more programs configured to be executed by one or more processors of a processing system, the one or more programs comprising instructions for performing the method (100) according to any one of the preceding claims.

8. A system (20) for monitoring and managing an Automated Driving System, ADS, of a plurality of ground vehicles (1), each ADS comprising a scenario identifier module configured to monitor scenarios in a surrounding environment of each corresponding ground vehicle (1), wherein each ADS is associated with a statistical model indicative of a statistical distribution related to a plurality of scenarios detectable by means of the scenario identifier module of each ADS, the system (20) comprising:
a memory (22) comprising the statistical model;
control circuitry (21) configured to:
obtain data from each of the plurality of ground vehicles (1), the data being indicative of:
a set of locally updated model parameters (32, 33, 34) of the statistical model, the locally updated model parameters being indicative of a statistical distribution associated with a detected scenario;
update the statistical model (31a) based on the obtained data;
transmit data indicative of the globally updated statistical model (31b) to the plurality of ground vehicles (1).

9. A method (200) for monitoring and managing an Automated Driving System, ADS, of a ground vehicle (1), wherein the ADS comprises a scenario identifier module configured to monitor scenarios in a surrounding environment of the ground vehicle (1), wherein the ADS is associated with a statistical model indicative of a statistical distribution related to a plurality of scenarios detectable by means of the scenario identifier module, the method comprising:
obtaining (201) sensor data comprising information about a surrounding environment of the ground vehicle;
detecting (202), by means of the scenario identifier module, a scenario in the surrounding environment based on the obtained sensor data and extracting a set of scenario parameters indicative of the detected scenario;
locally updating (203) a set of model parameters of the statistical model based on the extracted set of scenario parameters, the locally updated set of model parameters being indicative of a statistical distribution associated with the detected scenario; and
transmitting (204), to a remote entity comprising the statistical model, the locally updated set of model parameters and a number of samples used to generate the locally updated set of model parameters.

10. The method (200) according to claim 9, further comprising:
obtaining (205) a globally updated set of model parameters of the statistical model from the remote entity; and
locally updating (206) the statistical model based on the obtained globally updated set of model parameters in order to obtain an updated statistical model.

11. The method (200) according to claim 10, wherein the ADS comprises a set of operational margins, the method further comprising:
updating (210) the set of operational margins of the ADS based on the updated statistical model.

12. The method (200) according to claim 10 or 11, wherein the ADS is configured for an Operational Design Domain, ODD, and wherein the statistical model comprises a geographical parameter indicative of a geographical area within an operational environment of the ADS, the method (200) further comprising:
comparing (207) the updated statistical model against a set of predefined requirements for the ODD;
determining (208) if the updated statistical model indicates that the predefined requirements for the ODD are not fulfilled within the geographical area based on the comparison; and
inhibiting (209) activation of the ADS within the geographical area if the updated statistical model indicates that the predefined requirements for the ODD are not fulfilled within the geographical area.

13. A computer-readable storage medium storing one or more programs configured to be executed by one or more processors of a vehicle control system, the one or more programs comprising instructions for performing the method according to any one of claims 9 - 12.

14. A system (10) for monitoring and managing an Automated Driving System, ADS, of a ground vehicle (1), wherein the ADS comprises a scenario identifier module configured to monitor scenarios in a surrounding environment of the ground vehicle, wherein the ADS is associated with a statistical model indicative of a statistical distribution related to a plurality of scenarios detectable by means of the scenario identifier module, the system (10) comprising:
a memory (12) comprising the statistical model;
control circuitry (11) configured to:
obtain sensor data comprising information about a surrounding environment of the ground vehicle (1);
detect, by means of the scenario identifier module, a scenario in the surrounding environment based on the obtained sensor data and extracting a set of scenario parameters indicative of the detected scenario;
locally update a set of model parameters (32) of the statistical model based on the extracted set of scenario parameters, the locally updated model set of parameters being indicative of a statistical distribution associated with the detected scenario; and
transmit, to a remote entity comprising the statistical model, the locally updated set of model parameters (32) and a number of samples used to generate the locally updated model parameters.

15. A ground vehicle (1) comprising:
an Automated Driving System, ADS, configured to a scenario identifier module configured to monitor scenarios in a surrounding environment of the ground vehicle;
a perception system (6) comprising at least one sensor (6a, 6b, 6c) configured to monitor a surrounding environment of the ground vehicle (1);
a localization system (5) configured to monitor a geographical map position of the ground vehicle;
a system (10) for generating for monitoring and managing an ADS of the ground vehicle according to claim 14.

## Patentansprüche

1. Verfahren (100) zum Überwachen und Verwalten eines automatisierten Fahrsystems, ADS, einer Vielzahl von Bodenfahrzeugen (1), wobei jedes ADS ein Szenarioidentifikationsmodul umfasst, das dazu konfiguriert ist, Szenarien in einer Umgebung jedes entsprechenden Bodenfahrzeugs zu überwachen, wobei jedes ADS mit einem statistischen Modell verbunden ist, das eine statistische Verteilung angibt, die sich auf eine Vielzahl von Szenarien bezieht, die mittels des Szenarioidentifikationsmoduls jedes ADS erfassbar sind, wobei das Verfahren Folgendes umfasst:
Erhalten (101) von Daten von jedem der Vielzahl von Bodenfahrzeugen (1), wobei die Daten Folgendes angeben:
einen Satz von lokal aktualisierten Modellparametern des statistischen Modells, wobei die lokal aktualisierten Modellparameter eine statistische Verteilung angeben, die mit einem erfassten Szenario verbunden ist;
Aktualisieren (102) des statistischen Modells basierend auf den erhaltenen Daten;
Übertragen (103) von Daten, die das aktualisierte statistische Modell angeben, an die Vielzahl von Bodenfahrzeugen (1) .

2. Verfahren (100) nach Anspruch 1, wobei die empfangenen Daten ferner eine Anzahl von Proben angeben, die zum Erzeugen jedes Satzes von lokal aktualisierten Modellparametern verwendet werden.

3. Verfahren (100) nach einem der Ansprüche 1 oder 2, wobei die erhaltenen Daten ferner einen Satz von extrahierten Szenarioparametern des erfassten Szenarios angeben.

4. Verfahren (100) nach einem der vorstehenden Ansprüche, wobei das ADS für eine Operational Design Domain, ODD, konfiguriert ist und wobei das statistische Modell einen geografischen Parameter umfasst, der ein geografisches Gebiet innerhalb einer Betriebsumgebung des ADS angibt, wobei das Verfahren ferner Folgendes umfasst:
Vergleichen (104) des aktualisierten (102) statistischen Modells mit einem Satz von vordefinierten Anforderungen für die ODD;
Bestimmen (105), ob das aktualisierte statistische Modell angibt, dass die vordefinierten Anforderungen für die ODD innerhalb des geografischen Gebiets basierend auf dem Vergleich nicht erfüllt sind; und
Übertragen (106) eines Signals an die Vielzahl von Bodenfahrzeugen (1), wobei das Signal eine Anweisung angibt, eine Aktivierung des ADS innerhalb des geografischen Gebiets zu verhindern, wenn das aktualisierte statistische Modell angibt, dass die vordefinierten Anforderungen für die ODD innerhalb des geografischen Gebiets nicht erfüllt sind.

5. Verfahren (100) nach Anspruch 4, wobei das statistische Modell einen zeitlichen Parameter umfasst, der einen Zeitraum innerhalb des geografischen Gebiets angibt, wobei das Verfahren ferner Folgendes umfasst:
Bestimmen (105), ob das aktualisierte statistische Modell angibt, dass die vordefinierten Anforderungen für die ODD innerhalb des geografischen Gebiets während des Zeitraums basierend auf dem Vergleich nicht erfüllt sind; und
Übertragen (106) eines Signals an die Vielzahl von Bodenfahrzeugen, wobei das Signal eine Anweisung angibt, eine Aktivierung des ADS innerhalb des geografischen Gebiets während des Zeitraums zu verhindern, wenn das aktualisierte statistische Modell angibt, dass die vordefinierten Anforderungen für die ODD innerhalb des geografischen Gebiets während des Zeitraums nicht erfüllt sind.

6. Verfahren (100) nach einem der vorstehenden Ansprüche, wobei das ADS einen Satz von Betriebsspannen umfasst, wobei das Verfahren ferner Folgendes umfasst:
Aktualisieren (107) des Satzes von Betriebsspannen basierend auf dem aktualisierten statistischen Modell;
Übertragen (108) eines Signals, das den aktualisierten Satz von Betriebsspannen des ADS angibt, an die Vielzahl von Bodenfahrzeugen (1).

7. Computerlesbares Speichermedium, das ein oder mehrere Programme speichert, die zum Ausführen durch einen oder mehrere Prozessoren eines Verarbeitungssystems konfiguriert sind, wobei das eine oder die mehreren Programme Anweisungen zum Ausführen des Verfahrens (100) nach einem der vorstehenden Ansprüche umfassen.

8. System (20) zum Überwachen und Verwalten eines automatisierten Fahrsystems, ADS, einer Vielzahl von Bodenfahrzeugen (1), wobei jedes ADS ein Szenarioidentifikationsmodul umfasst, das dazu konfiguriert ist, Szenarien in einer Umgebung jedes entsprechenden Bodenfahrzeugs (1) zu überwachen, wobei jedes ADS mit einem statistischen Modell verbunden ist, das eine statistische Verteilung angibt, die sich auf eine Vielzahl von Szenarien bezieht, die mittels des Szenarioidentifikationsmoduls jedes ADS erfassbar sind, wobei das System (20) Folgendes umfasst:
einen Speicher (22), umfassend das statistische Modell;
Steuerschaltung (21), die zu Folgendem konfiguriert ist:
Erhalten von Daten von jedem der Vielzahl von Bodenfahrzeugen (1), wobei die Daten Folgendes angeben:
einen Satz von lokal aktualisierten Modellparametern (32, 33, 34) des statistischen Modells, wobei die lokal aktualisierten Modellparameter eine statistische Verteilung angeben, die mit einem erfassten Szenario verbunden ist;
Aktualisieren des statistischen Modells (31a) basierend auf den erhaltenen Daten;
Übertragen von Daten, die das globale, aktualisierte statistische Modell (31b) angeben, an die Vielzahl von Bodenfahrzeugen (1).

9. Verfahren (200) zum Überwachen und Verwalten eines automatisierten Fahrsystems, ADS, eines Bodenfahrzeugs (1), wobei das ADS ein Szenarioidentifikationsmodul umfasst, das dazu konfiguriert ist, Szenarien in einer Umgebung des Bodenfahrzeugs (1) zu überwachen, wobei das ADS mit einem statistischen Modell verbunden ist, das eine statistische Verteilung angibt, die sich auf eine Vielzahl von Szenarien bezieht, die mittels des Szenarioidentifikationsmoduls erfassbar sind, wobei das Verfahren Folgendes umfasst:
Erhalten (201) von Sensordaten, umfassend Informationen über eine Umgebung des Bodenfahrzeugs;
Erfassen (202), mittels des Szenarioidentifikationsmoduls, eines Szenarios in der Umgebung basierend auf den erhaltenen Sensordaten und Extrahieren eines Satzes von Szenarioparametern, die das erfasste Szenario angeben;
lokales Aktualisieren (203) eines Satzes von Modellparametern des statistischen Modells basierend auf dem extrahierten Satz von Szenarioparametern, wobei der lokal aktualisierte Satz von Modellparametern eine statistische Verteilung angibt, die mit dem erfassten Szenario verbunden ist; und
Übertragen (204), an eine entfernte Einheit, umfassend das statistische Modell, des lokal aktualisierten Satzes von Modellparametern und einer Anzahl von Proben, die verwendet werden, um den lokal aktualisierten Satz von Modellparametern zu erzeugen.

10. Verfahren (200) nach Anspruch 9, ferner umfassend:
Erhalten (205) eines global aktualisierten Satzes von Modellparametern des statistischen Modells von der entfernten Einheit; und
lokales Aktualisieren (206) des statistischen Modells basierend auf dem erhaltenen global aktualisierten Satz von Modellparametern, um ein aktualisiertes statistisches Modell zu erhalten.

11. Verfahren (200) nach Anspruch 10, wobei das ADS einen Satz von Betriebsspannen umfasst, wobei das Verfahren ferner Folgendes umfasst:
Aktualisieren (210) des Satzes von Betriebsspannen des ADS basierend auf dem aktualisierten statistischen Modell.

12. Verfahren (200) nach Anspruch 10 oder 11, wobei das ADS für eine Operational Design Domain, ODD, konfiguriert ist und wobei das statistische Modell einen geografischen Parameter umfasst, der ein geografisches Gebiet innerhalb einer Betriebsumgebung des ADS angibt, wobei das Verfahren (200) ferner Folgendes umfasst:
Vergleichen (207) des aktualisierten statistischen Modells mit einem Satz von vordefinierten Anforderungen für die ODD;
Bestimmen (208), ob das aktualisierte statistische Modell angibt, dass die vordefinierten Anforderungen für die ODD innerhalb des geografischen Gebiets basierend auf dem Vergleich nicht erfüllt sind; und
Hemmen (209) einer Aktivierung des ADS innerhalb des geografischen Gebiets, wenn das aktualisierte statistische Modell angibt, dass die vordefinierten Anforderungen für die ODD innerhalb des geografischen Gebiets nicht erfüllt sind.

13. Computerlesbares Speichermedium, das ein oder mehrere Programme speichert, die zum Ausführen durch einen oder mehrere Prozessoren eines Fahrzeugsteuersystems konfiguriert sind, wobei das eine oder die mehreren Programme Anweisungen zum Durchführen des Verfahrens nach einem der Ansprüche 9 bis 12 umfassen.

14. System (10) zum Überwachen und Verwalten eines automatisierten Fahrsystems, ADS, eines Bodenfahrzeugs (1), wobei das ADS ein Szenarioidentifikationsmodul umfasst, das dazu konfiguriert ist, Szenarien in einer Umgebung des Bodenfahrzeugs zu überwachen, wobei das ADS mit einem statistischen Modell verbunden ist, das eine statistische Verteilung angibt, die sich auf eine Vielzahl von Szenarien bezieht, die mittels des Szenarioidentifikationsmoduls erfassbar sind, wobei das System (10) Folgendes umfasst:
einen Speicher (12), umfassend das statistische Modell;
Steuerschaltung (11), die zu Folgendem konfiguriert ist:
Erhalten von Sensordaten, umfassend Informationen über eine Umgebung des Bodenfahrzeugs (1);
Erfassen, mittels des Szenarioidentifikationsmoduls, eines Szenarios in der Umgebung basierend auf den erhaltenen Sensordaten und Extrahieren eines Satzes von Szenarioparametern, die das erfasste Szenario angeben;
lokales Aktualisieren eines Satzes von Modellparametern (32) des statistischen Modells basierend auf dem extrahierten Satz von Szenarioparametern, wobei der lokal aktualisierte Modellparametersatz eine statistische Verteilung angibt, die mit dem erfassten Szenario verbunden ist; und
Übertragen, an eine entfernte Einheit, umfassend das statistische Modell, des lokal aktualisierten Satzes von Modellparametern (32) und einer Anzahl von Proben, die verwendet werden, um die lokal aktualisierten Modellparameter zu erzeugen.

15. Bodenfahrzeug (1), umfassend:
ein automatisiertes Fahrsystem, ADS, das ein Szenarioidentifikationsmodul umfasst, das dazu konfiguriert ist, Szenarien in einer Umgebung des Bodenfahrzeugs zu überwachen;
ein Wahrnehmungssystem (6), umfassend mindestens einen Sensor (6a, 6b, 6c), der dazu konfiguriert ist, eine Umgebung des Bodenfahrzeugs (1) zu überwachen;
ein Lokalisierungssystem (5), das dazu konfiguriert ist, eine geografische Kartenposition des Bodenfahrzeugs zu überwachen;
ein System (10) zum Erzeugen, Überwachen und Verwalten eines ADS des Bodenfahrzeugs nach Anspruch 14.

## Revendications

1. Procédé (100) de surveillance et de gestion d'un système de commande automatique, ADS, d'une pluralité de véhicules terrestres (1), chaque ADS comprenant un module d'identification de scénario configuré pour surveiller des scénarios dans un environnement proche de chaque véhicule terrestre correspondant, dans lequel chaque ADS est associé à un modèle statistique indiquant une distribution statistique liée à une pluralité de scénarios détectables au moyen du module d'identification de scénario de chaque ADS, le procédé comprenant :
l'obtention (101) de données provenant de chacun de la pluralité de véhicules terrestres (1), les données indiquant :
un ensemble de paramètres de modèle mis à jour localement du modèle statistique, les paramètres de modèle mis à jour localement indiquant une distribution statistique associée à un scénario détecté ;
la mise à jour (102) du modèle statistique sur la base des données obtenues ;
la transmission (103) de données indiquant le modèle statistique mis à jour à la pluralité de véhicules terrestres (1) .

2. Procédé (100) selon la revendication 1, dans lequel les données reçues indiquent en outre un nombre d'échantillons utilisés pour générer chaque ensemble de paramètres de modèle mis à jour localement.

3. Procédé (100) selon l'une quelconque des revendications 1 ou 2, dans lequel les données obtenues indiquent en outre un ensemble de paramètres de scénario extraits du scénario détecté.

4. Procédé (100) selon l'une quelconque des revendications précédentes, dans lequel l'ADS est configuré pour un domaine de conception opérationnelle, ODD, et dans lequel le modèle statistique comprend un paramètre géographique indiquant une zone géographique au sein d'un environnement opérationnel de l'ADS, le procédé comprenant en outre :
la comparaison (104) du modèle statistique mis à jour (102) à un ensemble d'exigences prédéfinies pour l'ODD ;
la détermination (105) de la question de savoir si le modèle statistique mis à jour indique que les exigences prédéfinies pour l'ODD ne sont pas remplies au sein de la zone géographique sur la base de la comparaison ; et
la transmission (106) d'un signal à la pluralité de véhicules terrestres (1), le signal indiquant une instruction visant à empêcher l'activation de l'ADS au sein de la zone géographique, si le modèle statistique mis à jour indique que les exigences prédéfinies pour l'ODD ne sont pas remplies au sein de la zone géographique.

5. Procédé (100) selon la revendication 4, dans lequel le modèle statistique comprend un paramètre temporel indiquant une période au sein de la zone géographique, le procédé comprenant en outre :
la détermination (105) de la question de savoir si le modèle statistique mis à jour indique que les exigences prédéfinies pour l'ODD ne sont pas remplies au sein de la zone géographique pendant la période sur la base de la comparaison ; et
la transmission (106) d'un signal à la pluralité de véhicules terrestres, le signal indiquant une instruction visant à empêcher l'activation de l'ADS au sein de la zone géographique pendant la période, si le modèle statistique mis à jour indique que les exigences prédéfinies pour l'ODD ne sont pas remplies au sein de la zone géographique pendant la période.

6. Procédé (100) selon l'une quelconque des revendications précédentes, dans lequel l'ADS comprend un ensemble de marges opérationnelles, le procédé comprenant en outre :
la mise à jour (107) de l'ensemble de marges opérationnelles sur la base du modèle statistique mis à jour ;
la transmission (108) d'un signal indiquant l'ensemble mis à jour de marges opérationnelles de l'ADS à la pluralité de véhicules terrestres (1).

7. Support de stockage lisible par ordinateur stockant un ou plusieurs programmes configurés pour être exécutés par un ou plusieurs processeurs d'un système de traitement, les un ou plusieurs programmes comprenant des instructions pour exécuter le procédé (100) selon l'une quelconque des revendications précédentes.

8. Système (20) de surveillance et de gestion d'un système de commande automatique, ADS, d'une pluralité de véhicules terrestres (1), chaque ADS comprenant un module d'identification de scénario configuré pour surveiller des scénarios dans un environnement proche de chaque véhicule terrestre correspondant (1), dans lequel chaque ADS est associé à un modèle statistique indiquant une distribution statistique liée à une pluralité de scénarios détectables au moyen du module d'identification de scénario de chaque ADS, le système (20) comprenant :
une mémoire (22) comprenant le modèle statistique ;
un circuit de commande (21) configuré pour :
obtenir des données provenant de chacun de la pluralité de véhicules terrestres (1), les données indiquant :
un ensemble de paramètres de modèle mis à jour localement (32, 33, 34) du modèle statistique, les paramètres de modèle mis à jour localement indiquant une distribution statistique associée à un scénario détecté ;
mettre à jour le modèle statistique (31a) sur la base des données obtenues ;
transmettre des données indiquant le modèle statistique mis à jour de globalement (31b) à la pluralité de véhicules terrestres (1).

9. Procédé (200) de surveillance et de gestion d'un système de commande automatique, ADS, d'un véhicule terrestre (1), dans lequel l'ADS comprend un module d'identification de scénario configuré pour surveiller des scénarios dans un environnement proche du véhicule terrestre (1), dans lequel l'ADS est associé à un modèle statistique indiquant une distribution statistique liée à une pluralité de scénarios détectables au moyen du module d'identification de scénario, le procédé comprenant :
l'obtention (201) de données de capteur comprenant des informations sur un environnement proche du véhicule terrestre ;
la détection (202), au moyen du module d'identification de scénario, d'un scénario dans l'environnement proche sur la base des données de capteur obtenues et l'extraction d'un ensemble de paramètres de scénario indiquant le scénario détecté ;
la mise à jour locale (203) d'un ensemble de paramètres de modèle du modèle statistique sur la base de l'ensemble extrait de paramètres de scénario, l'ensemble de paramètres de modèle mis à jour localement indiquant une distribution statistique associée au scénario détecté ; et
la transmission (204), à une entité distante comprenant le modèle statistique, de l'ensemble de paramètres de modèle mis à jour localement et d'un certain nombre d'échantillons utilisés pour générer l'ensemble de paramètres de modèle mis à jour localement.

10. Procédé (200) selon la revendication 9, comprenant en outre :
l'obtention (205) d'un ensemble mis à jour globalement de paramètres de modèle du modèle statistique auprès de l'entité distante ; et
la mise à jour locale (206) du modèle statistique sur la base de l'ensemble de paramètres de modèle obtenu mis à jour globalement afin d'obtenir un modèle statistique mis à jour.

11. Procédé (200) selon la revendication 10, dans lequel l'ADS comprend un ensemble de marges opérationnelles, le procédé comprenant en outre :
la mise à jour (210) de l'ensemble de marges opérationnelles de l'ADS sur la base du modèle statistique mis à jour.

12. Procédé (200) selon la revendication 10 ou 11, dans lequel l'ADS est configuré pour un domaine de conception opérationnelle, ODD, et dans lequel le modèle statistique comprend un paramètre géographique indiquant une zone géographique au sein d'un environnement opérationnel de l'ADS, le procédé (200) comprenant en outre :
la comparaison (207) du modèle statistique mis à jour à un ensemble d'exigences prédéfinies pour l'ODD ;
la détermination (208) de la question de savoir si le modèle statistique mis à jour indique que les exigences prédéfinies pour l'ODD ne sont pas remplies au sein de la zone géographique sur la base de la comparaison ; et
l'empêchement (209) de l'activation de l'ADS au sein de la zone géographique, si le modèle statistique mis à jour indique que les exigences prédéfinies pour l'ODD ne sont pas remplies au sein de la zone géographique.

13. Support de stockage lisible par ordinateur stockant un ou plusieurs programmes configurés pour être exécutés par un ou plusieurs processeurs d'un système de commande de véhicule, les un ou plusieurs programmes comprenant des instructions pour exécuter le procédé selon l'une quelconque des revendications 9 à 12.

14. Système (10) de surveillance et de gestion d'un système de commande automatique, ADS, d'un véhicule terrestre (1), dans lequel l'ADS comprend un module d'identification de scénario configuré pour surveiller des scénarios dans un environnement proche du véhicule terrestre, dans lequel l'ADS est associé à un modèle statistique indiquant une distribution statistique liée à une pluralité de scénarios détectables au moyen du module d'identification de scénario, le système (10) comprenant :
une mémoire (12) comprenant le modèle statistique ;
un circuit de commande (11) configuré pour :
obtenir des données de capteur comprenant des informations sur un environnement proche du véhicule terrestre (1) ;
détecter, au moyen du module d'identification de scénario, un scénario dans l'environnement proche sur la base des données de capteur obtenues et extraire un ensemble de paramètres de scénario indiquant le scénario détecté ;
mettre à jour localement un ensemble de paramètres de modèle (32) du modèle statistique sur la base de l'ensemble extrait de paramètres de scénario, l'ensemble de paramètres de modèle mis à jour localement indiquant une distribution statistique associée au scénario détecté ; et
transmettre, à une entité distante comprenant le modèle statistique, l'ensemble de paramètres de modèle mis à jour localement (32) et un certain nombre d'échantillons utilisés pour générer les paramètres de modèle mis à jour localement.

15. Véhicule terrestre (1), comprenant :
un système de commande automatique, ADS, configuré pour un module d'identification de scénario configuré pour surveiller des scénarios dans un environnement proche du véhicule terrestre ;
un système de perception (6) comprenant au moins un capteur (6a, 6b, 6c) configuré pour surveiller un environnement proche du véhicule terrestre (1) ;
un système de localisation (5) configuré pour surveiller une position sur une carte géographique du véhicule terrestre ;
un système (10) de génération pour la surveillance et la gestion d'un ADS du véhicule terrestre selon la revendication 14.
